# EUROPÄISCHE PATENTSCHRIFT

(11) **EP 2 949 492 B1**
(45) Veröffentlichungstag und Bekanntmachung des Hinweises auf die Patenterteilung: **26.10.2016**
(21) Anmeldenummer: 14169885.2
(22) Anmeldetag: 26.05.2014
(51) Int. Cl.: B60J 5/06

(54) **Schiebeplanenaufbau mit gesichertem Planenspannprofil**
Sliding canvas cover for with secure cover tensioning profile
Superstructure coulissante dotée d'un profilé de serrage sécurisé

(43) Veröffentlichungstag der Anmeldung: 02.12.2015
(73) Patentinhaber: Schmitz Cargobull AG, 48341 Altenberge (DE)
(72) Erfinder: Kreft, Thomas, 48565 Steinfurt (DE); Derks, Roger, 5922xt Venlo (NL)
(74) Vertreter: Cohausz & Florack

(56) Entgegenhaltungen:
- EP-A2- 2 708 394
- DE-U1-202013 001 899
- GB-A- 1 542 812

## Beschreibung

Die Erfindung betrifft einen Schiebeplanenaufbau eines Nutzfahrzeugs, insbesondere Lastkraftwagens, Anhängers oder Sattelaufliegers, mit wenigstens einer Schiebeplaneneinheit und wenigstens einer Eckrunge, wobei die Schiebeplaneneinheit wenigstens ein mit einer Plane verbundenes Planenspannprofil aufweist, wobei im geschlossenen Zustand der Schiebeplaneneinheit die Plane teilweise um das Planenspannprofil gewickelt und das Planenspannprofil in einer Aufnahme der Eckrunge aufgenommen ist.

Ein Nutzfahrzeug nach dem Oberbegriff des Anspruchs 1 ist in GB 1542812 offenbart. Nutzfahrzeuge im Sinne der Erfindung werden insbesondere zum Gütertransport im öffentlichen Straßenverkehr verwendet. Diese können im Falle von Lastkraftwagen selbst motorgetrieben sein oder von einem motorgetriebenen Zugfahrzeug gezogen werden, wie beispielsweise bei einem Anhänger oder Sattelauflieger. Die vorgenannten Nutzfahrzeuge weisen einen Schiebeplanenaufbau auf, der sich dadurch auszeichnet, dass wenigstens eine Seite des Nutzfahrzeugs mit einer Plane verschlossen werden kann, wobei sich die Plane längs der entsprechenden Seite des Nutzfahrzeugs zu wenigstens einer Seite aufschieben und wieder in die Gegenrichtung zuschieben lässt. Bei sogenannten Curtainsidern weist wenigstens eine Längsseite des Nutzfahrzeugs eine entsprechende Schiebeplaneneinheit auf, dessen Plane über Schlitten in einem Längsholm des Dachs verschieblich gehalten ist.

Die Schiebeplaneneinheit von Curtainsidern umfasst neben der Plane auch zwei Planenspannprofile in Form von Planenspannrohren, die an den beiden Längsenden der Plane mit dieser verbunden sind. Die Planenspannprofile können jeweils in eine Aufnahme einer Eckrunge eingeführt und dort an den oberen und unteren Enden der Planenspannprofile mit den zugehörigen Eckrungen verbunden werden. Die Eckrungen sind typischerweise an allen vier Ecken des Schiebeplanenaufbaus vorgesehen und stützen das Dach des Schiebeplanenaufbaus. Die beiden Eckrungen einer Längsseite des Schiebeplanenaufbaus sind über Längsholme des Dachs miteinander verbunden. Die Verbindung zwischen den Planenspannprofilen und den Eckrungen erfolgt so, dass die Planenspannprofile in den Aufnahmen der Eckrungen um ihre Längsachse gedreht werden können. Dadurch wird die Plane teilweise um das Planenspannprofil gewickelt, so dass sich die Plane zwischen den beiden Eckrungen spannt und daher im Fahrtwind nicht flattert. Wenn das Planenspannprofil soweit gedreht wurde, dass die Plane hinreichend stramm gespannt ist, kann das Planenspannprofil arretiert werden, um ein versehentliches Abwickeln der Planen zu verhindern.

Obwohl die Planenspannprofile an ihrem oberen und unteren Ende insbesondere formschlüssig mit den Eckrungen verbunden sind, können die Planenspannprofile aus den Aufnahmen springen, wenn sehr große Kräfte auf die gespannte Plane und damit auf die Planenspannprofile wirken. Dies ist beispielsweise beim Transport der Nutzfahrzeuge auf Güterzügen der Fall. So wird ein beachtlicher Unterdruck zwischen zwei sich auf benachbarten Gleisen in entgegengesetzte Richtungen passierenden Güterzügen erzeugt. Dieser Unterdruck kann dazu führen, dass die Planenspannprofile zwischen dem oberen und dem unteren Ende nach außen gebogen werden und dort aus der Aufnahme herausragen. Wenn die Planenspannprofile aufgrund von elastischen Rückstellkräften nicht wieder in die Ausgangslage bzw. in die Aufnahme zurück gelangen, ragen die Planenspannprofile in den Fahrtwind. Zusätzlich lässt die Spannung der Planen nach, so dass diese stärker im Fahrtwind flattern. Die Planenspannprofile können auch so weit gebogen werden, dass die Planenspannprofile sich aus den Halterungen am oberen und am unteren Ende der zugehörigen Eckrungen lösen. Dann flattert die Plane zusammen mit dem Planenspannprofil im Fahrtwind, was nicht nur aus aerodynamischen Gründen unerwünscht ist, sondern zudem zu erheblichen Beschädigungen etwa am Nutzfahrzeug oder der transportierten Ladung führen kann.

Um dies zu vermeiden ist bereits vorgeschlagen worden, Spanngurte auf den Seitenplaneneinheiten von einer Eckrunge zur nächsten zu spannen, die ein Ausbiegen der Planenspannprofile nach außen verhindern. Dies ist jedoch kostenintensiv und aufwendig. Ferner ist in der DE 20 2013 001899 U1 eine schwenkbare Sicherungsvorrichtung beschrieben worden, die in ihrer Sperrstellung ein Anheben des unteren Endes des Planenspannprofils verhindert. Dort kann das Planenspannprofil somit nicht außer Eingriff mit der Halterung für das Planenspannprofil an der Eckrunge gelangen. Die entsprechende Sicherungsvorrichtung kann jedoch nicht verhindern, dass sich das Planenspannprofil an seinem oberen Ende von der Eckrunge löst. Dort könnte eine entsprechende Sicherungsvorrichtung zwar vorgesehen aber nicht ohne Weiteres bedient werden. Die Sicherungsvorrichtung ist zudem aufwendig in der Fertigung und der Handhabung. Es kann zudem nicht ausgeschlossen werden, dass die Sicherungsvorrichtung bewusst oder unbewusst ungenutzt bleibt.

Der vorliegenden Erfindung liegt daher die Aufgabe zugrunde, den eingangs genannten und zuvor näher erläuterten Schiebeplanenaufbau derart auszugestalten und weiterzubilden, dass die Planenspannprofile zuverlässiger und einfacher in den Aufnahmen der Eckrungen gehalten werden können.

Diese Aufgabe ist bei einem Schiebeplanenaufbau gemäß des Oberbegriffs von Anspruch 1 dadurch gelöst, dass im geschlossenen Zustand der Schiebeplaneneinheit wenigstens ein an der Plane und/oder an wenigstens einem Planenspannprofil festgelegtes Arretiermittel in der Aufnahme der Eckrunge derart aufgenommen ist, dass das wenigstens eine Arretiermittel ein Herausziehen des wenigstes einen Planenspannprofils im Bereich des Arretiermittels aus der Aufnahme verhindert.

Die Erfindung hat erkannt, dass die Planen und/oder die Planenspannprofile selbst mit einem Arretiermittel versehen werden können, das im geschlossenen Zustand der Schiebeplaneneinheit das Planenspannprofil in der Aufnahme der Eckrunge fixiert. Das Arretiermittel muss lediglich entsprechende Abmessungen haben und mit dem Aufwickeln der Plane in die Aufnahme der Eckrunge eingeführt werden. Dies kann bedarfsweise ohne zusätzliche Bedienschritte erfolgen, da die Plane beim Schließen der Schiebeplaneneinheit ohnehin zum Strammziehen der Plane teilweise auf das Planenspannprofil aufgewickelt werden muss. Somit kann die Arretierung des Planenspannprofils auch nicht vergessen werden.

Das Arretiermittel füllt einen Teil des freien Querschnitts der Aufnahme aus. Der freie Querschnitt muss recht großzügig bemessen sein, um die Schiebeplaneneinheit problemlos einführen und den aufzuwickelnden Teil der Plane aufnehmen zu können. Durch das teilweise Ausfüllen der Aufnahme durch das Arretiermittel wird das Planenspannprofil jedoch in der Aufnahme derart blockiert, dass das Planenspannprofil nicht ohne die Plane zuvor wieder teilweise vom Planenspannprofil abzuwickeln, insbesondere zerstörungsfrei, aus der Aufnahme entnommen werden kann.

Wenn das Arretiermittel am Planenspannprofil festgelegt ist, muss es nicht unbedingt in erster Linie darauf ankommen, dass die Plane teilweise abgewickelt wird, sondern eher auf das Drehen des Planenspannprofils beim Abwickeln der Plane, wodurch das Arretiermittel aus der Aufnahme gelangt. Dies ist insbesondere dann der Fall, wenn die Plane entlang des Planenspannprofils auf Höhe des Arretiermittels eine Aussparung aufweist. Dann kann das Arretiermittel in der Aussparung aufgenommen werden und gelangt, bedarfsweise, beim Aufwickeln der Plane auf das Planenspannprofil kein Teil der Plane zwischen das Arretiermittel und die Aufnahme. Eine Faltenbildung der Plane kann so an der entsprechenden Stelle verhindert werden.

Das Herausziehen des Planenspannprofils aus der Aufnahme wird mittels des Arretiermittels insbesondere dadurch verhindert, dass das Arretiermittel den Freiraum des Planenspannprofils in der Aufnahme einschränkt. Das Arretiermittel steht also dem Planenspannprofil im Weg, wenn auf das Planenspannprofil eine hinreichende Auszugskraft ausgeübt wird.

Bei der Plane handelt es sich vorzugsweise um eine aus dem Stand der Technik bekannte Plane aus Kunststoff, die Verstärkungselemente, etwa in Form von Fasern aufweisen kann. Diese Verstärkungselemente können ebenfalls aus einem Kunststoff gefertigt sein. Es kommen aber auch andere Materialien in Frage. Weiter vorzugsweise ist die Plane über Schlitten in einem Längsholm des Dachs des Nutzfahrzeugs geführt, und zwar längs des Längsholms. Auf diese Weise kann die Plane längs des Längsholms in einer und/oder die andere Richtung aufgeschoben werden. Zur Fixierung der Plane an ihrem unteren Ende können Spanngurte vorgesehen sein, die bedarfsweise an einem unteren Längsträgerprofil festgelegt werden können.

Das Planenspannprofil ist vorzugsweise rohrförmig, also in Form eines Planenspannrohrs, ausgebildet. Das Planenspannrohr weist dabei insbesondere einen im Wesentlichen kreisförmigen Querschnitt auf. Alternativ oder zusätzlich kann das Planenspannprofil mit einem in Längsrichtung des Planenspannprofils verlaufenden Spalt ausgebildet sein, durch den die Plane in das Planenspannprofil geführt ist. Im Planenspannprofil kann die Plane dann über einen Keder gehalten sein. Ein Keder ist dabei eine Verdickung der Plane, etwa in Form einer Wulst, die im Planenspannprofil aufgenommen ist und deren Abmessungen einen Durchtritt durch den Spalt des Planenspannprofils verhindern. Der Plane ist dann zwar nicht unbedingt in Längsrichtung des Planenspannprofils festgelegt aber dennoch zuverlässig am Planenspannprofil gehalten. Grundsätzlich sind aber auch andere Ausgestaltungen des Planenspannprofils denkbar, die zudem nicht rohrförmig sein müssen.

Bei einer ersten bevorzugten Ausgestaltung des Schiebeplanenaufbaus kann wenigstens ein Arretiermittel über einen Keder am Planenspannprofil festgelegt sein. Der Keder kann dabei an einer Hinterschneidung eines Spalts, insbesondere desselben Spalts, an dem auch die Plane festgelegt ist, gehalten sein. Das Arretiermittel ist dann unabhängig von der Plane und sehr stabil am Planenspannprofil gehalten. Das Arretiermittel kann unmittelbar oder über ein Zwischenstück mit dem Keder verbunden sein. Das Zwischenstück lässt sich dann zusammen mit der Plane aufwickeln, bis das Arretiermittel in die Aufnahme gelangt. Ohne Zwischenstück liegt das Arretiermittel bedarfsweise auch bei ungespannter Plane an der Außenseite des Planenspannprofils an. Dies kann insbesondere dann zweckmäßig sein, wenn das Planenspannprofil zum Spannen der Plane nur geringfügig gedreht werden muss. Auch dann wird jedoch das Arretiermittel durch Drehen des Planenspannprofils in die Aufnahme bewegt. Das Arretiermittel kann auch durch andere Mittel als einen Keder am Planenspannprofil festgelegt sein. Das Arretiermittel kann beispielsweise mit dem Planenspannprofil verschraubt, vernietet, verklebt und/oder verschweißt sein, um den Herstellungsaufwand gering zu halten.

In diesem Zusammenhang ist es weiter bevorzugt, wenn die Plane an der entsprechenden Stelle eine Aussparung aufweist. Diese Aussparung kann das Festlegen des Arretiermittels am Planenspannprofil ermöglichen. Bedarfsweise kann wenigstens der Keder der Plane entlang des Planenspannprofils unterbrochen sein, insbesondere wenn der Keder der Plane und der Keder des Arretiermittels im gleichen Spalt aufgenommen sind. An der Stelle des Spalts, an dem der Keder der Plane unterbrochen ist, kann dann der Keder des Arretiermittels vorgesehen sein. Die Aussparung der Plane kann aber auch so groß sein, und zwar insbesondere in Längsrichtung der Plane, dass das Arretiermittel in der Aussparung aufgenommen werden kann und, bedarfsweise, nicht zwischen das Arretiermittel und die Aufnahme gelangt.

Alternativ oder zusätzlich ist im geschlossenen Zustand der Schiebeplaneneinheit das wenigstens eine Arretiermittel in der Aufnahme der Eckrunge derart aufgenommen, dass das wenigstens eine Arretiermittel durch die Anlage des Arretiermittels an die Eckrunge ein Herausziehen des Planenspannprofils im Bereich des Arretiermittels aus der Aufnahme verhindert. Das Arretiermittel füllt dann also nicht nur einen erheblichen Teil des freien Querschnitts der Aufnahme aus, sondern gelangt auch mit der Aufnahme bzw. mit der Eckrunge in Anlage, um zu verhindern, dass das Planenspannprofil aus der Aufnahme gelangt. Dies kann bedeuten, dass das Arretiermittel auf der Außenseite der Plane angeordnet ist oder dass das Arretiermittel am Planenspannprofil festgelegt ist, wobei die Plane in diesem Bereich eine Aussparung aufweisen kann. Beides ist vorteilhaft, weil die Gefahr der Faltenbildung der Plane beim Aufwickeln auf das Planenspannprofil geringer ist. Es kann aber auch bedeuten, dass das Arretiermittel um weniger als eine Umdrehung auf das Planenspannprofil aufgewickelt ist. Andernfalls kann das Arretiermittel ohne gesonderte Maßnahmen von der Plane abgedeckt werden. Die Anlage des Arretiermittels an der Eckrunge bietet allgemein den Vorteil, dass bei Anlage an der Eckrunge eine höhere Reibung oder eine definiertere Deformation des Arretiermittels erzielt werden kann. Zudem wird vermieden, dass eine unerwünschte Deformation des Arretiermittels durch Einklemmen des Arretiermittels zwischen zwei Lagen des auf das Planenspannprofil aufgewickelten Teils der Plane auftritt.

Das Arretierelement muss im geschlossenen Zustand der Schiebeplaneneinheit jedoch nicht dauerhaft in Anlage an der Eckrunge sein. Es reicht aus, dass dies der Fall ist, wenn auf das Planenspannprofil eine hinreichende Auszugskraft ausgeübt wird. Spätestens dann gelangt das Arretierelement gegen die Eckrunge und versperrt dem Planenspannprofil so den Weg, um aus der Aufnahme der Eckrunge herausrutschen zu können. Dabei kann das Arretierelement zu diesem Zweck in geeigneter Weise an die Innenkontur der Aufnahme für das Planenspannprofil angepasst sein. Welche Form des Arretiermittels dabei zweckmäßig ist, kann stark von der Ausgestaltung der Aufnahme abhängen.

Alternativ oder zusätzlich kann im geschlossenen Zustand der Schiebeplaneneinheit das wenigstens eine Arretiermittel in der Aufnahme der Eckrunge derart aufgenommen sein, dass das Arretiermittel ein Herausziehen des Planenspannprofils im Bereich des Arretiermittels aus der Aufnahme durch einen Reibschluss und/oder Formschluss des Arretiermittels mit der Aufnahme bzw. der Eckrunge verhindert. Im geschlossenen Zustand der Schiebeplaneneinheit ist das Planenspannprofil also vorzugsweise reibschlüssig und/oder formschlüssig in der Aufnahme gehalten. Dies ermöglicht eine einfache und zugleich zuverlässige Arretierung des Planenspannprofils in der Aufnahme der Eckrunge. Dabei muss der Formschluss und/oder der Reibschluss im geschlossenen Zustand der Schiebeplaneneinheit nicht zwangsläufig dauerhaft gegeben sein. Es reicht bedarfsweise aus, dass sich der Formschluss und/oder Reibschluss einstellt, wenn auf das Planenspannprofil eine hinreichende Auszugskraft wirkt, und zwar bevor das Planenspannprofil in einem Querschnitt oder über die gesamte Länge des Planenspannprofils, bedarfsweise vollständig, aus der Aufnahme der Eckrunge gelangt. Auf diese Weise kann beispielsweise sichergestellt werden, dass das Arretiermittel einfach und ohne erhöhten Kraftaufwand durch Aufwickeln der Plane um das Planenspannprofil in die Aufnahme der Eckrunge eingeführt werden kann.

Zur sicheren Arretierung des Planenspannprofils in der Aufnahme bietet es sich zusätzlich oder alternativ an, wenn das wenigstens eine Planenspannprofil, bedarfsweise mit der teilweise aufgewickelten Plane, im geschlossenen Zustand der Schiebeplaneneinheit eine Hinterschneidung der Aufnahme hintergreift. Es besteht dabei vorzugsweise ein Formschluss zwischen dem Planenspannprofil, bedarfsweise zwischen dem Planenspannprofil zusammen mit dem aufgewickelten Teil der Plane, in einer Richtung zur Außenseite des Schiebeplanenaufbaus und senkrecht zu dem nicht auf das wenigstens eine Plananspannrohr aufgewickelten Teil der Plane. Das Planenspannprofil kann also nicht einfach senkrecht zur der durch die Plane verschlossenen Seite des Schiebeplanenaufbaus aus der Aufnahme gezogen werden. Das Planenspannprofil muss vielmehr erst die Hinterschneidung passieren und damit zunächst in einer Richtung parallel zum nicht aufgewickelten Teil der Plane verschoben werden, und zwar entgegen der Rückstellkraft des gespannten und nicht aufgewickelten Teils der Plane. Dadurch werden einerseits die Kräfte vergrößert, die erforderlich sind, um das Planenspannprofil aus der Aufnahme zu ziehen. Andererseits kann diese Verschiebung des Planenspannprofils dazu genutzt werden, das Planenspannprofil mittels des Arretiermittels in der Aufnahme zu sichern.

Damit das Planenspannprofil einerseits sicher in der Aufnahme der Eckrunge gehalten und andererseits problemlos zum Schließen der entsprechenden Seitenwand in die Aufnahme eingeführt werden kann, ist es zweckmäßig, wenn das Arretiermittel dicker ist als die Plane, und zwar in einer Richtung senkrecht zur Plane gesehen. Dann wird durch das Arretiermittel ein nicht unerheblicher Teil des nach dem Einführen des Planenspannprrofils verbleibenden Teils des freien Querschnitts der Aufnahme der Eckrunge durch das Arretiermittel ausgefüllt. Dies gilt insbesondere dann, wenn das Arretiermittel in der entsprechenden Richtung gesehen wenigstens dreimal so dick oder gar wenigstens fünfmal so dick ist wie die Plane.

Um eine beispielsweise jahreszeitlich bedingte Längenveränderung der Plane der Schiebeplaneneinheit auszugleichen, kann das Arretiermittel bedarfsweise in seiner Position längs der Plane und/oder relativ zum Planenspannprofil verstellt werden. Das Arretierelement kann also bedarfsweise in verschiedenen Positionen festgelegt werden, wobei diese Positionen vorzugsweise unterschiedliche Abstände zum Planenspannprofil aufweisen. Wenn sich die Plane beispielsweise im Sommer längt, muss die Plane beim Strammziehen weiter auf das Planenspannprofil aufgewickelt werden. Das Arretiermittel sollte dann im abgewickelten Zustand der Plane weiter vom Planenspannprofil beabstandet sein als im Winter, um zu jeder Jahreszeit in der Aufnahme etwa die gleiche Position einzunehmen.

Das Arretiermittel kann wenigstens zu der dem Planenspannprofil zugewandten oder der dem Planenspannprofil abgewandten Seite keilförmig oder abgerundet ausgebildet sein. So kann beispielsweise die Arretierung des Planenspannprofils in der Aufnahme der Eckrunge sichergestellt werden, obwohl die Plane eine Längenveränderung erfahren hat oder die Plane auf die an gegenüberliegenden Seiten der Plane vorgesehenen Planenspannprofilen ungleichmäßig aufgewickelt worden ist. Gleichzeitig kann so bedarfsweise eine einfache und zuverlässige Aufnahme des Arretiermittels in der Aufnahme erreicht werden.

Besonders vorteilhaft ist es, wenn das Arretiermittel aus Kunststoff gefertigt ist. So kann das Arretiermittel ausreichend widerstandsfähig und elastisch ausgebildet werden, um eine zuverlässige Arretierung des Planenspannprofiles in der Aufnahme sicherzustellen.

Alternativ oder zusätzlich kann über die Höhe der Plane eine Mehrzahl von Arretiermitteln an der Plane und/oder dem Planenspannprofil festgelegt sein. Die Arretierung des Planenspannprofiles mittels Arretiermitteln kann dann an mehreren Stellen entlang des Planenspannprofiles erfolgen. Alternativ kann sich das Arretiermittel aber auch um wenigstens einen erheblichen Teil, vorzugsweise wenigstens 25% oder gar wenigstens 50%, der Länge des Planenspannprofiles entlang desselben erstrecken, und zwar vorzugsweise parallel zum Planenspannprofil.

Um eine sichere Arretierung des Planenspannprofiles zu gewährleisten, kann wenigstens ein Arretiermittel eine Reihe von Lamellen aufweisen, die in einer Richtung senkrecht zum Planenspannprofil hintereinander angeordnet sind. Durch das Verbiegen der Lamellen beim Einführen in die Aufnahme oder beim Ausziehen des Planenspannprofils aus der Aufnahme, kann diesem ein großer Widerstand entgegengesetzt werden. Außerdem ist es infolge der Lamellen bedarfsweise weniger entscheidend, wie weit das Arretiermittel in die Aufnahme eingeführt wird. Diese vorgenannten Vorteile ergeben sich zudem insbesondere dann, wenn die Lamellen jeweils beabstandet voneinander vorgesehen sind.

Bei geeigneter Ausgestaltung und Anordnung des Arretiermittels kann dieses im geschlossenen Zustand der Schiebeplaneneinheit lediglich teilweise in der Aufnahme der Eckrunge aufgenommen sein. Dies kann nützlich sein, um eine Längenveränderung der Plane oder ein unterschiedliches Aufwickeln der Plane auf zwei Planenspannprofile auszugleichen. Das Arretierelement kann dann bedarfsweise mehr oder weniger weit in die Aufnahme eingeführt werden, das Planenspannprofil in der Aufnahme aber in jedem Fall sicher arretieren.

Die wenigstens eine Schiebeplaneneinheit kann grundsätzlich nur an einer Seite mit einem Planenspannprofil in einer Aufnahme einer Eckrunge festgelegt werden. Es kann aber auch vorgesehen sein, dass die wenigstens eine Schiebeplaneneinheit an zwei, vorzugsweise gegenüberliegenden, Seiten mit jeweils einem Planenspannprofil in jeweils einer Aufnahme jeweils einer Eckrunge festgelegt wird. Dies vereinfacht die Handhabung der Schiebeplaneneinheit, da die Schiebeplaneneinheit dann zum Öffnen und Schließen der Schiebeplaneneinheit an beiden Seiten in gleicher Weise gehandhabt wird. Dabei bietet es sich zudem an, wenn im geschlossenen Zustand der Schiebeplaneneinheit jedes Planenspannprofil mit der teilweise aufgewickelten Plane in jeweils einer Aufnahme jeweils einer Eckrunge aufgenommen ist und jeweils wenigstens ein an der Plane und/oder am Planenspannprofil festgelegtes Arretiermittel in jeder Aufnahme derart aufgenommen ist, dass das wenigstens eine Arretiermittel ein Herausziehen des jeweiligen Planenspannprofils im Bereich des jeweiligen Arretiermittels aus der Aufnahme beispielsweise durch Anlage an die jeweilige Eckrunge verhindert. Auf diese Weise können beide Planenspannprofile in gleicher Weise gegenüber einem unerwünschten Herausziehen aus der jeweiligen Aufnahme der jeweiligen Eckrunge gesichert werden. Dies führt zu einer weiter vereinfachten Bedienung der Schiebeplaneneinheit.

Die Erfindung wird nachfolgend anhand einer lediglich Ausführungsbeispiele darstellenden Zeichnung näher erläutert. In der Zeichnung zeigt
- Fig. 1: einen Sattelauflieger mit einem ersten erfindungsgemäßen Schiebeplanenaufbau in einer perspektivischen Ansicht,
- Fig. 2: das Detail II des hinteren Endes der linken Seitenwand des Schiebeplanenaufbaus aus Fig. 1 mit nicht strammgezogener Plane in einer Seitenansicht,
- Fig.3: das Detail aus Fig. 2 in einer horizontalen Schnittansicht entlang der Schnittebene III-III,
- Fig. 4: das Detail II des hinteren Endes der linken Seitenwand des Schiebeplanenaufbaus aus Fig. 1 mit strammgezogener Plane in einer Seitenansicht,
- Fig. 5: das Detail aus Fig. 4 in einer horizontalen Schnittansicht entlang der Schnittebene V-V,
- Fig. 6: ein Detail einer Schiebeplaneneinheit mit einem verschiebbaren Arretiermittel in Seitenansicht,
- Fig. 7: ein Detail einer Schiebeplaneneinheit mit einem Lamellen aufweisenden Arretiermittel in Seitenansicht und
- Fig. 8: ein Detail eines zweiten erfindungsgemäßen Schiebeplanenaufbaus gemäß Fig. 2 mit nicht strammgezogener Plane in einer Seitenansicht und
- Fig. 9: das Detail gemäß Fig. 8 mit strammgezogener Plane in einer Seitenansicht.

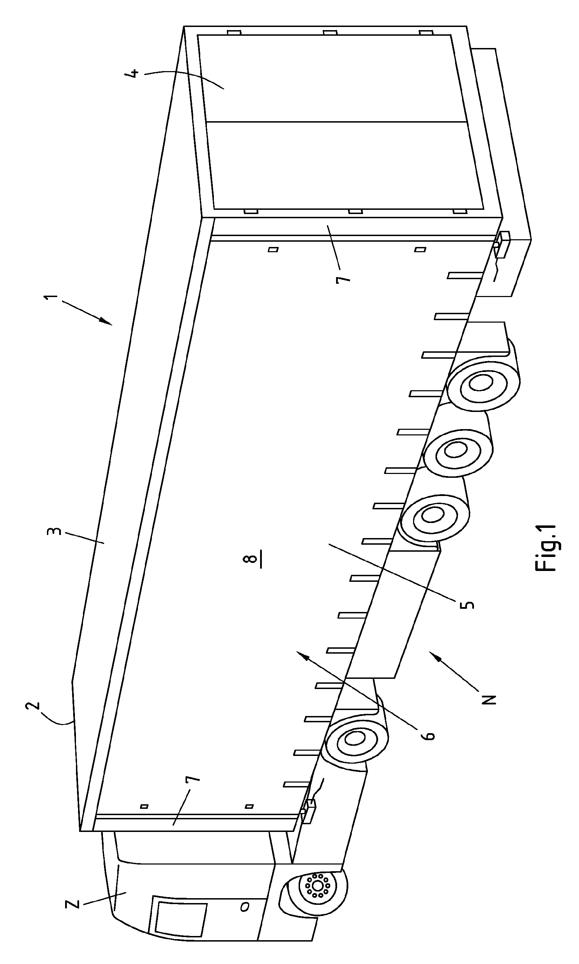

In der Fig. 1 ist ein Nutzfahrzeug N in Form eines Sattelaufliegers mit einem Schiebeplanenaufbau 1 dargestellt. Das Nutzfahrzeug N wird von einer Zugmaschine Z gezogen. Der Schiebeplanenaufbau 1 umschließt einen Laderaum zum Transport von Gütern im öffentlichen Straßenverkehr und umfasst eine feste Stirnwand 2, ein durch eine Plane verschlossenes Dach 3, eine Flügeltüren aufweisende Rückwand 4 und über Schiebeplaneneinheiten 5 verschlossene Seitenwände 6. Zur Aussteifung des Dachs 3 weist das Dach 3 quer verlaufende Spriegel und an den Außenseiten in Längsrichtung des Nutzfahrzeugs N ausgerichtete Längsholme auf. Die Spriegel werden dabei von den Längsholmen getragen, die ihrerseits wenigstens teilweise durch in den vier Ecken des Schiebeplanenaufbaus 1 vorgesehen Eckrungen 7 gestützt werden.

An den Längsholmen sind Schlitten verschiebbar gehalten, welche die Planen 8 der Schiebeplaneneinheiten 5 tragen. Die Schlitten erlauben das Aufschieben und Zuschieben der Planen 8 längs der jeweiligen Seitenwand 6. Bei aufgeschobener Plane 8 kann der Laderaum von der entsprechenden Seite beladen oder entladen werden. Zum Verschließen der Seitenwände 6 sind die Planen 8 an ihren Längsenden jeweils mit einem Planenspannprofil 9 in Form eines Planenspannrohrs, also mit im Wesentlichen kreisförmigem Querschnitt, verbunden, das in eine Aufnahme 10 in den entsprechenden Eckrungen 7 eingeführt werden kann. Zudem kann jedes Planenspannprofil 9 am oberen und unteren Ende mit der Eckrunge 7 lösbar verbunden werden, um ein versehentliches Herausrutschen der Planenspannprofile 9 aus den Aufnahmen 10 zu vermeiden.

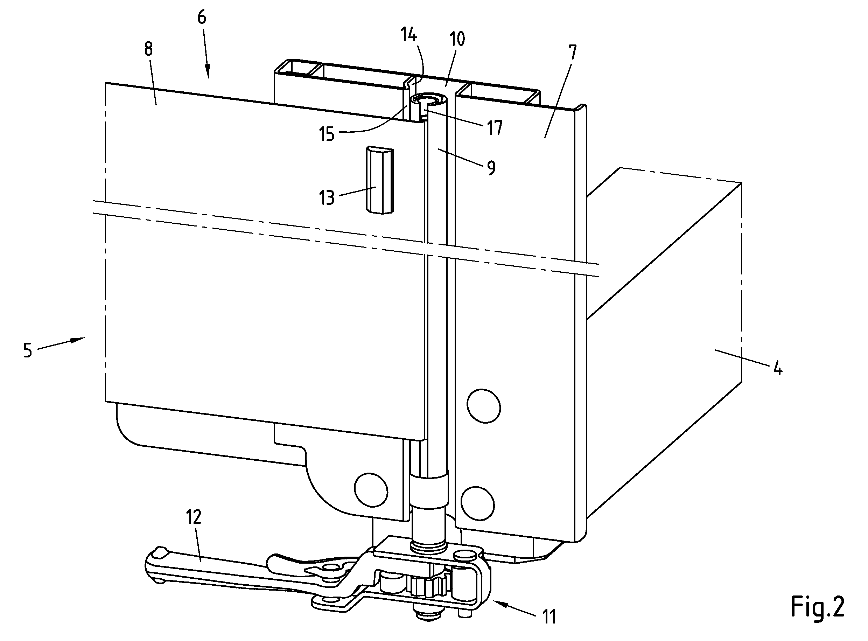

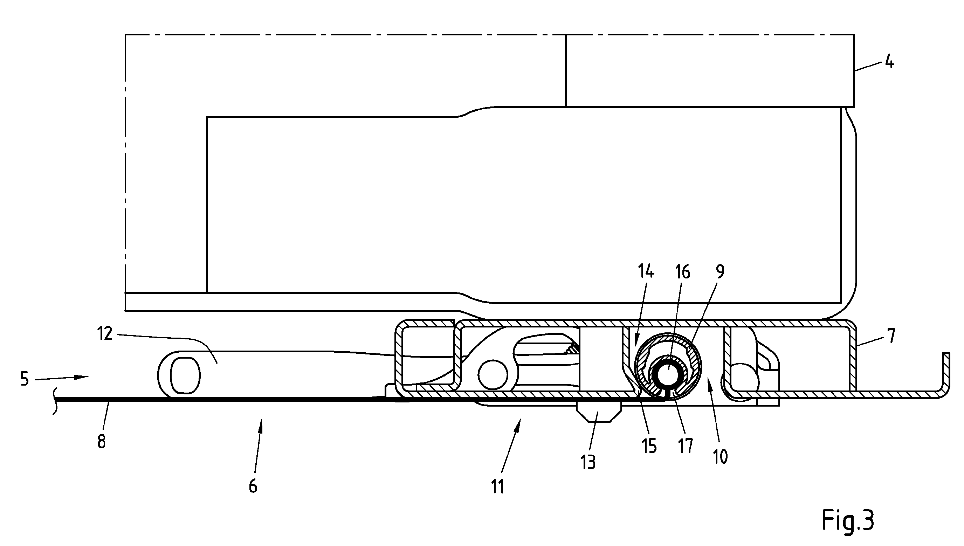

Wie dies insbesondere in der Fig. 2 und 3 dargestellt ist, ist beim dargestellten und insoweit bevorzugten Schiebeplanenaufbau 1 der untere Teil der Planenspannprofile 9 jeweils mit einem Spannmechanismus 11 in Form einer Ratsche verbunden. Über einen Hebel 12 des Spannmechanismus 11 kann das entsprechende Planenspannprofil 9 um seine Längsache gedreht und sodann arretiert werden. Durch das Drehen des Planenspannprofils 9 wird die Plane 8 teilweise um das Planenspannprofil 9 herum gewickelt und somit gespannt, damit die Plane 8 während des Transports nicht im Fahrtwind flattert. Die Plane 8 ist dabei über einen Keder 16 in Form einer Wulst im Planenspannprofil 9 gehalten, da der Keder 16 dicker ist als die Breite des Spalts 17, durch den die Plane 8 in das Planenspannprofil 9 eingeführt ist, kann die Plane 8 beim Spannen nicht aus dem Planenspannprofil 9 herausgezogen werden.

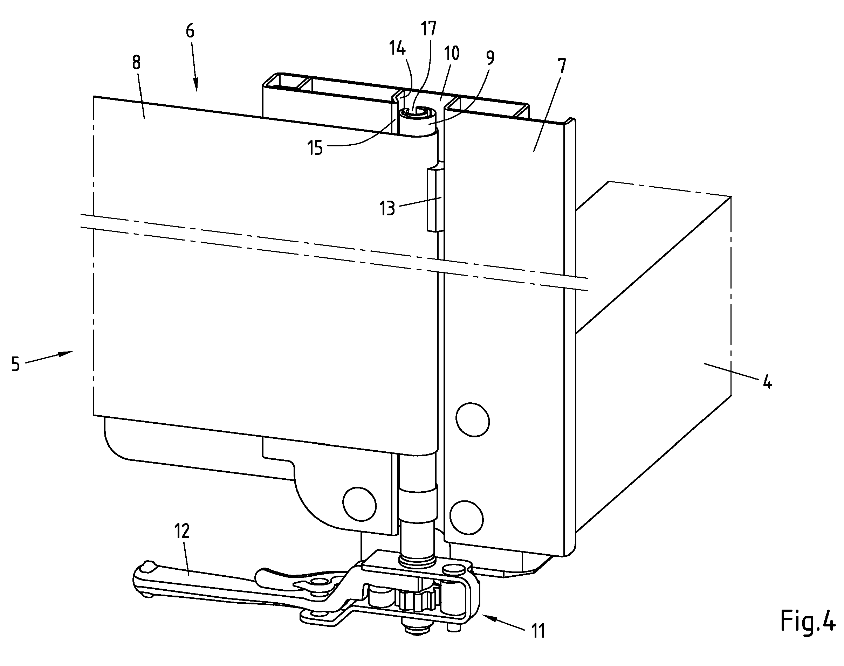

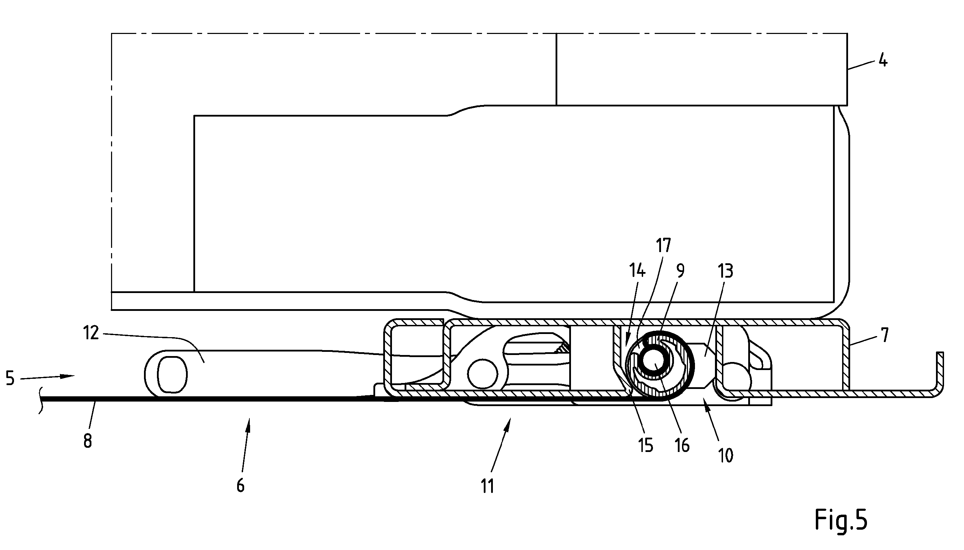

Um zu verhindern, dass die Planenspannprofile 9 während des Transports ganz oder teilweise aus den entsprechenden Aufnahmen 10 herausgezogen werden können, sind beim dargestellten und insoweit bevorzugten Schiebeplanenaufbau 1 an den Planen 8 Arretiermittel 13 vorgesehen, die den mit den Planenspannprofilen 9 verbundenen Rändern der Planen 8 zugeordnet sind. Die einem Rand zugeordneten Arretiermittel 13 sind dabei jeweils übereinander angeordnet. Die Position der Arretiermittel 13 ist so gewählt, dass die Arretiermittel 13 beim Strammziehen der Planen 8 durch teilweises Aufwickeln der Plane 8 um die Planenspannprofile 9 in die Aufnahme 10 der Eckrungen 7 gelangen und dort den freien Querschnitt der Aufnahme 10 teilweise ausfüllen. Dies ist in den Fig. 4 und 5 näher dargestellt.

Die Arretiermittel 13 sind dann so in den Aufnahmen 10 angeordnet, dass sich die Arretiermittel 13 an der Aufnahme 10 bzw. an der Eckrunge 7 abstützen, wenn auf die Planenspannprofile 9 eine hinreichende Auszugskraft wirkt. Unter einer Auszugskraft wird dabei eine Kraft verstanden, die in eine Richtung aus der entsprechenden Aufnahme 10 heraus gerichtet ist, und zwar insbesondere durch die Öffnung der Aufnahme 10 zur Außenseite des Schiebeplanenaufbaus 1. Ohne die Arretiermittel 13 könnte die Auszugskraft dazu führen, dass das entsprechende Planenspannprofil 9 einerseits in einem Querschnitt oder über die ganze Länge sowie andererseits ganz oder teilweise aus der Aufnahme 10 herausgezogen wird. Beim dargestellten und insoweit bevorzugten Schiebeplanenaufbau 1 hintergreifen die Planenspannprofile 9 teilweise Hinterschneidungen 14 der Eckrungen 7, die durch Vorsprünge 15 der Eckrungen 7 gebildet werden. Infolge der Hinternschneidung 14, des entsprechenden Vorsprungs 15 und/oder des Formschlusses zwischen dem Planenspannprofil 9 und der Eckrunge 7, kann das Planenspannprofil 9 nicht senkrecht zur jeweiligen Seitenwand 6 aus der Aufnahme 10 herausgezogen werden. Um die Hinterschneidung 14 bzw. den Vorsprung 15 der Eckrunge 7 zu passieren, muss das Planenspannprofil 9 vielmehr zunächst teilweise parallel zur Seitenwand 6 bzw. zum abgespannten Teil der Plane 8 bewegt werden, und zwar entgegen der Rückstellkraft des abgespannten Teils der Plane 8. Diese Bewegung des Planenspannprofils 9 wird jedoch durch das in der Aufnahme 10 aufgenommene Arretiermittel 13 verhindert. Das Arretiermittel 13 blockiert den freien Querschnitt der Aufnahme 10 für das Planenspannprofil 9 in der entsprechenden Richtung. Dadurch wird erreicht, dass das Planenspannprofil 9 die Hinterschneidung 14 der Eckrunge 7 im geschlossenen Zustand der Schiebeplaneneinheit 5 zuverlässig hintergreift und somit nicht aus der Aufnahme 10 herausgezogen werden kann.

Das Arretiermittel 13 ist beim dargestellten und insoweit bevorzugten Schiebeplanenaufbau 1 je nach der Wirkrichtung der Auszugskraft reibschlüssig oder formschlüssig in der Aufnahme 10 gehalten, und zwar insbesondere dann, wenn eine hinreichend hohe Auszugskraft auf das Planenspannprofil 9 wirkt. Es ist nämlich ohne entsprechende Auszugskraft nicht erforderlich, dass das Arretiermittel 13 in Anlage an die Aufnahme 10 und/oder die Eckrunge 7 gelangt. Dies kann sogar unerwünscht sein, um ein sicheres und einfaches Einführen des Arretiermittels 13 in die Aufnahme 10 zu gewährleisten. Das Planenspannprofil 9 ist beim dargestellten und insoweit bevorzugten Schiebeplanenaufbau 1 dagegen in jedem Fall formschlüssig in der Aufnahme 10 der Eckrunge 7 gehalten.

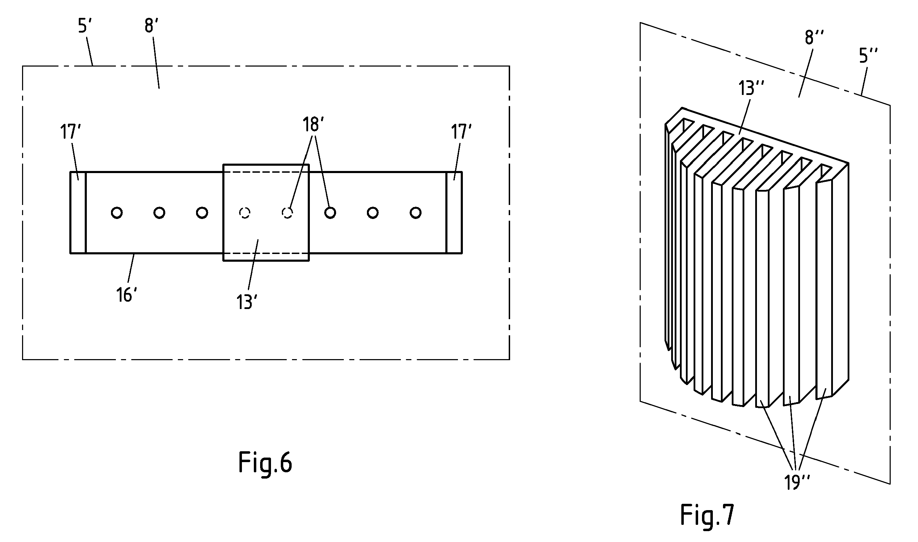

In der Fig. 6 ist eine Schiebeplaneneinheit 5' mit einem in Längsrichtung der Seitenwand verstellbaren Arretiermittel 13' dargestellt. Dabei ist an der Plane 8', eine Lasche 16' vorgesehen. Die Lasche 16' ist an den beiden Längsenden 17' mit der Plane 8' verbunden, beispielsweise verschweißt. Das Arretiermittel 13' kann dabei die Lasche 16' teilweise hintergreifen, um diese stets an der Lasche 16' zu halten. Bedarfsweie kann die Lasche 16' auch durch eine Öffnung des Arretiermittels 13' hindurchgeführt sein. Die Lasche 13' weist in Längsrichtung mehrere Öffnungen 18' auf, die der lösbaren Fixierung des Arretiermittels 13' in unterschiedlichen Positionen an der Lasche 16' dienen. Die Position des Arretiermittels 13' kann somit bedarfsweise verändert werden, um etwa Längenveränderungen der Plane 8' auszugleichen. Dazu muss das Arretiermittel 13' lediglich über eine andere Öffnung 18' oder über andere Öffnungen 18' an einer anderen Stelle entlang der Lasche 16' festgelegt werden.

In der Fig. 7 ist eine weitere Schiebeplaneneinheit 5" mit einem Lamellen 19" aufweisenden Arretiermittel 13" dargestellt. Die Lamellen 19" sind im geöffneten Zustand der Schiebeplaneneinheit 5" nach außen bezogen auf die Plane 8" gerichtet und in Längsrichtung der Plane 8" voneinander beabstandet. Infolge der Lamellen 19" kann das Arretiermittel 13" einfach und zuverlässig wenigstens teilweise in die Aufnahme einer Eckrunge eingeführt werden. Zudem kann das Arretiermittel 13" dann selbst im nur teilweise in die Aufnahme eingeführten Zustand das Planenspannprofil sicher in der Aufnahme halten.

Sowohl das in der Fig. 6 als auch das in der Fig. 7 dargestellte Arretiermittel 13',13" ist in einer dem Planenspannprofil zugewandten und in einer dem Planenspannprofil abgewandten Richtung keilförmig oder abgerundet ausgebildet. Das Arretiermittel 13',13" kann so einfacher und zuverlässiger in die Aufnahme eingeführt werden und sich dort besser zwischen dem Planenspannprofil und der Eckrunge verkeilen.

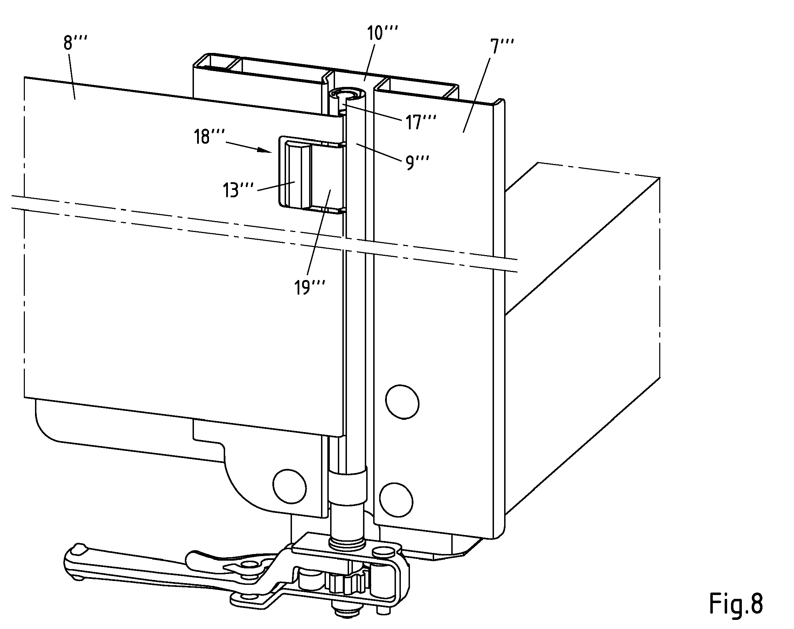

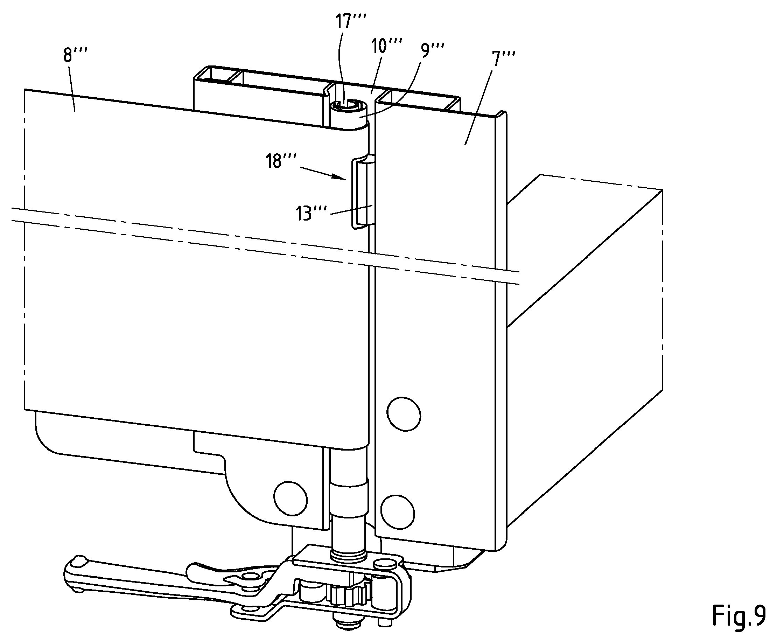

In den Fig. 8 und 9 ist ein Detail eines Schiebeplanenaufbaus 1'" dargestellt, der im Prinzip dem Schiebeplanenaufbau 1 gemäß Fig. 1 bis 5 entspricht. Allerdings ist das Arretiermittel 13"' nicht an der Plane 8"', sondern am Planenspannprofil 9"' festgelegt. Die Plane 8"' weist an ihrem seitlichen Rand einen Keder in Form einer Wulst auf, mit dem die Plane 8'" im Planenspannprofil 9'" aufgenommen ist. Die an den Keder angrenzende Plane 8'" ist durch einen Spalt 17'" des Planenspannprofils 9"' nach außen geführt, der so schmal ist, dass der Keder nicht durch den Spalt 17"' hindurchgezogen werden kann, sondern fest im Planenspannprofil 9"' gehalten ist. Im Bereich des Arretiermittels 13'" ist die Plane 8'" mitsamt dem Keder unterbrochen und bildet eine Aussparung 18"'. Dort ist anstelle des Keders der Plane 8'" ein Keder im Planenspannprofil 9"' vorgesehen, der das Arretiermittel 13"' analog zur Plane 8"' am Planenspannprofil 9'" fixiert. Dabei ist der Keder über ein flaches Zwischenstück 19"', dessen Dicke etwa der Dicke der Plane 8'" entsprechen kann, mit dem Keder verbunden. Auf das Zwischenstück 19'" kann bedarfsweise aber auch verzichtet werden. Beim Aufwickeln und Strammziehen der Plane 8'" wird auch das Zwischenstück 19'" mit aufgewickelt, bis das Arretiermittel 13'" wie in der Fig. 9 dargestellt in die Aufnahme 10'" der zugeordneten Eckrunge 7"' gelangt. Dort fixiert das Arretiermittel 13"' das Planenspannprofil 9"' wie zuvor bereits beschrieben.

Alternativ kann anstelle des Arretiermittels auch das äußere Ende der Lasche gemäß Fig. 6, insbesondere in einer Aussparung der Plane, am Planenspannprofil fixiert sein. Das Arretiermittel kann dann vorzugsweise in Längsrichtung der Plane in unterschiedlichen Positionen lösbar an der Lasche festgelegt werden.

## Patentansprüche

1. Schiebeplanenaufbau (1,1"') eines Nutzfahrzeugs (N), insbesondere Lastkraftwagens, Anhängers oder Sattelaufliegers, mit wenigstens einer Schiebeplaneneinheit (5,5',5") und wenigstens einer Eckrunge (7,7'"), wobei die Schiebeplaneneinheit (5,5',5") wenigstens ein mit einer Plane (8,8',8",8"') verbundenes Planenspannprofil (9,9"') aufweist, wobei im geschlossenen Zustand der Schiebeplaneneinheit (5,5',5") sie Plane (8,8',8",8'") teilweise um das Planenspannprofil (9"') gewickelt und das Planenspannprofil (9,9"')in einer Aufnahme (10,10"') der Eckrunge (7,7"') aufgenommen ist,
**dadurch gekennzeichnet, dass**
im geschlossenen Zustand der Schiebeplaneneinheit (5,5',5") wenigstens ein an der Plane (8,8',8",8"') und/oder am Planenspannprofil (9,9"') festgelegtes Arretiermittel (13,13',13",13"') in der Aufnahme (10) der Eckrunge (7,7"') derart aufgenommen ist, dass das wenigstens eine Arretiermittel (13,13',13",13'") ein Herausziehen des Planenspannprofils (9,9"") im Bereich des Arretiermittels (13,13',13",13"') aus der Aufnahme (10,10"') verhindert.

2. Schiebeplanenaufbau nach Anspruch 1,
**dadurch gekennzeichnet, dass**
wenigstens ein Arretiermittel (13"') über einen Keder am Planenspannprofil (9"') festgelegt ist.

3. Schiebeplanenaufbau nach Anspruch 2,
**dadurch gekennzeichnet, dass**
die Plane (8"') im Bereich des wenigstens einen Arretiermittels (13"') und/oder der Verbindung zwischen dem Arretiermittel (13"") und dem Planenspannprofil (9"') eine Aussparung (18'") aufweist.

4. Schiebeplanenaufbau nach einem der Ansprüche 1 bis 3,
**dadurch gekennzeichnet, dass**
im geschlossenen Zustand der Schiebeplaneneinheit (5,5',5") das wenigstens eine Arretiermittel (13,13',13",13"') in der Aufnahme (10,10"') der Eckrunge (7,7"') derart aufgenommen ist, dass das wenigstens eine Arretiermittel (13,13',13",13"') durch die Anlage des Arretiermittels (13,13',13",13"') an die Eckrunge (7,7"') ein Herausziehen des Planenspannprofils (9,9"') im Bereich des Arretiermittels (13,13',13",13"') aus der Aufnahme (10,10"') verhindert.

5. Schiebeplanenaufbau nach einem der Ansprüche 1 bis 4,
**dadurch gekennzeichnet, dass**
im geschlossenen Zustand der Schiebeplaneneinheit das wenigstens eine Arretiermittel (13,13',13",13'") in der Aufnahme (10,10"') der Eckrunge (7,7"') derart aufgenommen ist, dass das Arretiermittel (13,13',13",13"') ein Herausziehen des Planenspannprofils (9,9"") im Bereich des Arretiermittels (13,13',13",13"') aus der Aufnahme (10,10"') durch einen Reibschluss und/oder Formschluss des Arretiermittels (13,13',13",13"') mit der Aufnahme (10,10"') verhindert.

6. Schiebeplanenaufbau nach einem der Ansprüche 1 bis 5,
**dadurch gekennzeichnet, dass**
das wenigstens eine Planenspannprofil (9,9"') mit der teilweise aufgewickelten Plane (8,8',8",8'") im geschlossenen Zustand der Schiebeplaneneinheit (5,5',5") in einer Richtung zur Außenseite des Schiebeplanenaufbaus (1,1'") und senkrecht zu dem nicht auf das wenigstens eine Planenspannprofil (9,9"') aufgewickelten Teil der Plane (8,8',8",8"') eine Hinterschneidung (14) der Aufnahme (10,10"') wenigstens hintergreift.

7. Schiebeplanenaufbau nach einem der Ansprüche 1 bis 6,
**dadurch gekennzeichnet, dass**
das Arretiermittel (13,13',13",13"') senkrecht zur Plane (8,8',8",8'") dicker, wenigstens dreimal dicker, insbesondere wenigstens fünfmal dicker, als die Plane (8,8',8",8'") ist.

8. Schiebeplanenaufbau nach einem der Ansprüche 1 bis 7,
**dadurch gekennzeichnet, dass**
das Arretiermittel (13') in verschiedenen Positionen mit unterschiedlichen Abständen zum Planenspannprofil (9) festlegbar ist.

9. Schiebeplanenaufbau nach einem der Ansprüche 1 bis 8,
**dadurch gekennzeichnet, dass**
das Arretiermittel (13,13',13",13"') wenigstens zu der dem Planenspannprofil (9,9"') zugewandten oder der dem Planenspannprofil (9,9'") abgewandten Seite keilförmig oder abgerundet ausgebildet ist.

10. Schiebeplanenaufbau nach einem der Ansprüche 1 bis 9,
**dadurch gekennzeichnet, dass**
das Arretiermittel (13,13',13",13'") aus Kunststoff gefertigt ist.

11. Schiebeplanenaufbau nach einem der Ansprüche 1 bis 10,
**dadurch gekennzeichnet, dass**
über die Höhe der Plane (8,8',8",8"') eine Mehrzahl von Arretiermitteln (13,13',13",13"') an der Plane (8,8',8",8'") und/oder an dem Planenspannprofil (9,9"') festgelegt ist.

12. Schiebeplanenaufbau nach einem der Ansprüche 1 bis 11,
**dadurch gekennzeichnet, dass**
das wenigstens eine Arretiermittel (13") eine Reihe von Lamellen (19") aufweist, die in einer Richtung senkrecht zum Planenspannprofil (9) hintereinander und, vorzugsweise, jeweils beabstandet voneinander, vorgesehen sind.

13. Schiebeplanenaufbau nach einem der Ansprüche 1 bis 12,
**dadurch gekennzeichnet, dass**
das wenigstens eine Arretiermittel (13,13',13",13"') im geschlossenen Zustand der Schiebeplaneneinheit (5,5',5") lediglich teilweise in der Aufnahme (10,10"') der Eckrunge (7,7"') aufgenommen ist.

14. Schiebeplanenaufbau nach einem der Ansprüche 1 bis 13,
**dadurch gekennzeichnet, dass**
die wenigstens eine Schiebeplaneneinheit (5,5',5") an gegenüberliegenden Seiten jeweils ein mit der Plane (8,8',8",8'") verbundenes Planenspannprofil (9,9"') aufweist, dass im geschlossenen Zustand der Schiebeplaneneinheit (5,5',5") jedes Planenspannprofil (9,9"') mit der teilweise aufgewickelten Plane (8,8',8",8'") in jeweils einer Aufnahme (10,10'") jeweils einer Eckrunge (7,7"') aufgenommen ist und dass im geschlossenen Zustand der Schiebeplaneneinheit (5,5',5") jeweils wenigstens ein an der Plane (8,8',8",8"') und/oder am Planenspannprofil (9,9'") festgelegtes Arretiermittel (13,13',13",13'") in jeder Aufnahme (10,10'") derart aufgenommen ist, dass das wenigstens eine Arretiermittel (13,13',13",13"') ein Herausziehen des jeweiligen Planenspannprofils (9,9"') im Bereich des jeweiligen Arretiermittels (13,13',13",13'") aus der Aufnahme (10,10"') verhindert.

## Claims

1. Curtain side body (1, 1"') of a commercial vehicle (N), in particular a heavy goods vehicle, trailer or semi-trailer, with at least one curtain side unit (5, 5', 5") and at least one corner stanchion (7, 7"'), wherein the curtain side unit (5, 5', 5") has at least one tarpaulin tensioning profile (9, 9"') connected with a tarpaulin (8, 8', 8", 8"'), wherein in the closed state of the curtain side unit (5, 5', 5") the tarpaulin (8, 8', 8", 8'") is partially wound around the tarpaulin tensioning profile (9"') and the tarpaulin tensioning profile (9, 9"') is accommodated in a recess (10, 10"') in the corner stanchion (7, 7"'),
**characterised in that**,
in the closed state of the curtain side unit (5, 5', 5"), at least one locking means (13, 13', 13", 13"') clamped to the tarpaulin (8, 8', 8", 8"') and/or to the tarpaulin tensioning profile (9 ,9"') is accommodated in the recess (10) of the corner stanchion (7, 7"') in such a way that the at least one locking means (13, 13', 13", 13"') prevents the tarpaulin tensioning profile (9, 9"') from being pulled out of the recess (10, 10"') in the region of the locking means (13, 13', 13", 13'").

2. Curtain side body according to claim 1,
**characterised in that**
at least one locking means (13"') is clamped to the tarpaulin tensioning profile (9"') by means of a beading.

3. Curtain side body according to claim 2,
**characterised in that**
the tarpaulin (8"') has an opening (18"') in the region of the at least one locking means (13'") and/or in the region of the connection between the locking means (13"') and the tarpaulin tensioning profile (9"').

4. Curtain side body according to one of the claims 1 to 3,
**characterised in that**,
in the closed state of the curtain side unit (5, 5', 5"), the at least one locking means (13, 13', 13", 13"') is accommodated in the recess (10, 10"') of the corner stanchion (7, 7"') in such a way that the at least one locking means (13, 13', 13", 13"') prevents the tarpaulin tensioning profile (9, 9"') from being pulled out of the recess (10, 10"') in the region of the locking means (13, 13', 13", 13'") as a result of the locking means (13, 13', 13" ,13'") resting against the corner stanchion (7, 7"').

5. Curtain side body according to one of the claims 1 to 4,
**characterised in that**,
in the closed state of the curtain side unit (5,5', 5"), the at least one locking means (13, 13', 13", 13"') is accommodated in the recess (10, 10"') of the corner stanchion (7, 7"') in such a way that the locking means (13, 13', 13", 13'") prevents the tarpaulin tensioning profile (9, 9"') from being pulled out of the recess (10, 10"') in the region of the locking means (13, 13', 13", 13"') through a frictional locking and/or form-locking of the locking means (13, 13', 13", 13"') with the recess (10, 10"').

6. Curtain side body according to one of the claims 1 to 5,
**characterised in that**,
in the closed state of the curtain side unit (5, 5', 5"), the at least one tarpaulin tensioning profile (9, 9"') together with the partially wound tarpaulin (8, 8', 8", 8"') at least engages behind an undercut (14) in the recess (10, 10"') in a direction towards the outer side of the curtain side body (1, 1'") and perpendicular to the part of the tarpaulin (8, 8', 8", 8"') not wound onto the at least one tarpaulin tensioning profile (9,9"').

7. Curtain side body according to one of the claims 1 to 6,
**characterised in that**
the locking means (13, 13', 13", 13'") is, perpendicular to the tarpaulin (8, 8', 8", 8"'), thicker, at least three times thicker, in particular at least five times thicker than the tarpaulin (8, 8', 8", 8"').

8. Curtain side body according to one of the claims 1 to 7,
**characterised in that**
the locking means (13') can be locked in different positions at different distances from the tarpaulin tensioning profile (9).

9. Curtain side body according to one of the claims 1 to 8,
**characterised in that**
the locking means (13, 13', 13", 13"') is rounded or wedge-shaped in form, at least on the side facing the tarpaulin tensioning profile (9, 9"') or facing away from the tarpaulin tensioning profile (9, 9"').

10. Curtain side body according to one of the claims 1 to 9,
**characterised in that**
the locking means (13, 13', 13", 13"') is made of plastic.

11. Curtain side body according to one of the claims 1 to 10,
**characterised in that**
a plurality of locking means (13, 13', 13", 13"') is clamped to the tarpaulin (8, 8', 8", 8"') and/or to the tarpaulin tensioning profile (9, 9"') over the height of the tarpaulin (8, 8', 8", 8"').

12. Curtain side body according to one of the claims 1 to 11,
**characterised in that**
the at least one locking means (13") has a series of ribs (19") which are arranged after one another in a direction perpendicular to the tarpaulin tensioning profile (9) and are preferably spaced apart from one another.

13. Curtain side body according to one of the claims 1 to 12,
**characterised in that**,
in the closed state of the curtain side unit (5, 5', 5"), the at least one locking means (13,13', 13", 13"') is only partially accommodated in the recess (10, 10"') of the corner stanchion (7, 7"').

14. Curtain side body according to one of the claims 1 to 13,
**characterised in that**
the at least one curtain side unit (5, 5', 5") has, on opposite sides, a tarpaulin tensioning profile (9, 9"') connected with the tarpaulin (8, 8', 8", 8"'), that in the closed state of the curtain side unit (5, 5', 5") each tarpaulin tensioning profile (9, 9"'), together with the partially wound tarpaulin (8, 8', 8", 8"'), is accommodated in a recess (10, 10"') of a corner stanchion (7, 7'") and that, in the closed state of the curtain side unit (5, 5', 5"), at least one locking means (13, 13', 13", 13"') clamped to the tarpaulin (8, 8', 8", 8"') and/or to the tarpaulin tensioning profile (9, 9"') is accommodated in each recess (10, 10'") in such a way that the at least one locking means (13, 13', 13", 13'") prevents the respective tarpaulin tensioning profile (9, 9"') from being pulled out of the recess (10, 10"') in the region of the locking means (13, 13', 13", 13'").

## Revendications

1. Structure de bâche coulissante (1, 1"') d'un véhicule utilitaire (N), en particulier d'un poids lourd, d'une remorque ou d'une semi-remorque, avec au moins une unité de bâche coulissante (5, 5', 5") et au moins une ranche d'angle (7, 7"'), auquel cas l'unité de bâche coulissante (5, 5', 5") présente au moins un profil de tension de bâche (9, 9"') relié à une bâche (8, 8', 8", 8"'), auquel cas, à l'état fermé de l'unité de bâche coulissante (5, 5', 5"), la bâche (8, 8', 8", 8"') est partiellement enroulée autour du profil de tension de bâche (9"') et le profil de tension de bâche (9, 9"') est incorporé dans un logement (10, 10"') de la ranche d'angle (7, 7"'),
**caractérisée en ce que**,
à l'état fermé de l'unité de bâche coulissante (5, 5', 5"), au moins un moyen de verrouillage (13, 13', 13", 13"'), fixé sur la bâche (8, 8', 8", 8"') et/ou sur le profil de tension de bâche (9, 9"') est incorporé de telle sorte dans le logement (10) de la ranche d'angle (7, 7"') que le au moins un moyen de verrouillage (13, 13', 13", 13"') empêche une extraction du profil de tension de bâche (9, 9"') hors du logement (10, 10"') dans la zone du moyen de verrouillage (13, 13', 13", 13"').

2. Structure de bâche coulissante selon la revendication 1,
**caractérisée en ce qu'**au moins un moyen de verrouillage (13"') est fixé à l'aide d'une trépointe sur le profil de tension de bâche (9"').

3. Structure de bâche coulissante selon la revendication 2,
**caractérisée en ce que**
la bâche (8"') présente un évidement (18"') dans la zone d'au moins un moyen de verrouillage (13"') et/ou dans la zone du raccordement entre le moyen de verrouillage (13"') et le profil de tension de bâche (9'").

4. Structure de bâche coulissante selon une des revendications de 1 à 3,
**caractérisée en ce que**,
à l'état fermé de l'unité de bâche coulissante (5, 5', 5"), le au moins un moyen de verrouillage (13, 13', 13", 13"') est incorporé de telle sorte dans le logement (10, 10"') de la ranche d'angle (7, 7"') que le au moins un moyen de verrouillage (13, 13', 13", 13"') empêche une extraction du profil de tension de bâche (9, 9"') hors du logement (10, 10"') dans la zone du moyen de verrouillage (13, 13', 13", 13"') par l'appui du moyen de verrouillage (13, 13', 13", 13"') contre la ranche d'angle (7, 7'").

5. Structure de bâche coulissante selon une des revendications de 1 à 4,
**caractérisée en ce que**,
à l'état fermé de l'unité de bâche coulissante (5, 5', 5"), le au moins un moyen de verrouillage (13, 13', 13", 13"') est incorporé de telle sorte dans le logement (10, 10"') de la ranche d'angle (7, 7'") que le moyen de verrouillage (13, 13', 13", 13"') empêche une extraction du profil de tension de bâche (9, 9"') hors du logement (10, 10"') dans la zone du moyen de verrouillage (13, 13', 13", 13"') par une liaison par friction et/ou un procédé d'accouplement mécanique du moyen de verrouillage (13, 13', 13", 13"') avec le logement (10, 10"').

6. Structure de bâche coulissante selon une des revendications de 1 à 5,
**caractérisée en ce que**
le au moins un profil de tension de bâche (9, 9"') avec la bâche (8, 8', 8", 8"') partiellement enroulée, à l'état fermé de l'unité de bâche coulissante (5, 5', 5"), vient en prise par derrière, au moins en partie, avec une contre-dépouille (14) du logement (10, 10"') dans une direction vers le côté extérieur de la structure de bâche coulissante (1, 1"') et verticalement par rapport à une partie de la bâche (8, 8', 8", 8"') n'étant pas enroulée sur le au moins un profil de tension de bâche (9, 9"').

7. Structure de bâche coulissante selon une des revendications de 1 à 6,
**caractérisée en ce que**
le moyen de verrouillage (13, 13', 13", 13"'), verticalement par rapport à la bâche (8, 8', 8", 8"'), est plus épais, au moins trois fois plus épais, de préférence cinq fois plus épais que la bâche (8, 8', 8", 8"').

8. Structure de bâche coulissante selon une des revendications de 1 à 7,
**caractérisée en ce que**
le moyen de verrouillage (13') est susceptible de pouvoir être fixé dans diverses positions à des distances différentes par rapport au profil de tension de bâche (9).

9. Structure de bâche coulissante selon une des revendications de 1 à 8,
**caractérisée en ce que**
le moyen de verrouillage (13, 13', 13", 13"') est conçu en forme de coin ou arrondi au moins du côté orienté vers le profil de tension de bâche (9, 9"') ou du côté opposé au profil de tension de bâche (9, 9"').

10. Structure de bâche coulissante selon une des revendications de 1 à 9,
**caractérisée en ce que**
le moyen de verrouillage (13, 13', 13", 13"') est fabriqué en matière synthétique.

11. Structure de bâche coulissante selon une des revendications de 1 à 10,
**caractérisée en ce que**
plusieurs moyens de verrouillage (13, 13', 13", 13"') sont fixés sur la bâche (8, 8', 8", 8"') et/ou sur le profil de tension de bâche (9, 9"') sur la hauteur de la bâche (9, 9"').

12. Structure de bâche coulissante selon une des revendications de 1 à 11,
**caractérisée en ce que**
le au moins un moyen de verrouillage (13") présente une rangée de lamelles (19"), lesquelles sont prévues d'affilée en une direction verticale par rapport au profil de tension de bâche (9) et, de préférence, respectivement espacées l'une de l'autre.

13. Structure de bâche coulissante selon une des revendications de 1 à 12,
**caractérisée en ce que**
le au moins un moyen de verrouillage (13, 13', 13", 13"'), à l'état fermé de l'unité de bâche coulissante (5, 5', 5"), est simplement partiellement incorporé dans le logement (10, 10"') de la ranche d'angle (7, 7"').

14. Structure de bâche coulissante selon une des revendications de 1 à 13,
**caractérisée en ce que**
la au moins une unité de bâche coulissante (5, 5', 5") présente, sur les côtés opposés, respectivement un profil de tension de bâche (9, 9"') relié à la bâche (8, 8', 8", 8"'), et que, à l'état fermé de l'unité de bâche coulissante (5, 5', 5"), chaque profil de tension de bâche (9, 9"') avec la bâche (8, 8', 8", 8"') partiellement enroulée est incorporé respectivement dans un logement (10, 10"') de respectivement une ranche d'angle (7, 7"'), et que, à l'état fermé de l'unité de bâche coulissante (5, 5', 5"), respectivement au moins un moyen de verrouillage (13, 13', 13", 13"') fixé sur la bâche (8, 8', 8", 8"') et/ou sur le profil de tension de bâche (9, 9"') est incorporé de telle sorte dans chaque logement (10, 10"') que le au moins un moyen de verrouillage (13, 13', 13", 13"') empêche une extraction du profil de tension de bâche (9, 9"') respectif hors du logement (10, 10"') dans la zone du moyen de verrouillage (13, 13', 13", 13"') respectif.
